Europäisches Patentamt

European Patent Office

Office européen des brevets

(19)

(11) Veröffentlichungsnummer: **0 002 190**
**B1**

(12) **EUROPÄISCHE PATENTSCHRIFT**

(45) Veröffentlichungstag der Patentschrift:
12.08.81

(21) Anmeldenummer: 78101262.0

(22) Anmeldetag: 30.10.78

(51) Int. Cl.³: **G 02 F 1/01**, G 02 F 1/17,
F 21 K 2/00, G 09 F 13/20

(54) **Vorrichtung zur Darstellung eines Bildes vor einem optisch kontrastierenden Hintergrund.**

(30) Priorität: 29.11.77 DE 2753203

(43) Veröffentlichungstag der Anmeldung:
13.06.79 Patentblatt 79/12

(45) Bekanntmachung des Hinweises auf die Patenterteilung:
12.08.81 Patentblatt 81/32

(84) Benannte Vertragsstaaten:
**CH FR GB NL SE**

(56) Entgegenhaltungen:
**DE-A-2 616 669**
**DE-A-2 619 367**

(73) Patentinhaber: **SIEMENS AKTIENGESELLSCHAFT Berlin
und München, Postfach 22 02 61, D-8000 München 22 (DE)**

(72) Erfinder: **Krüger, Hans, Peralohstrasse 13,
D-8000 München 80 (DE)**
Erfinder: **Schauer, Alois, Lohengrinstrasse 7,
D-8022 Grünwald (DE)**
Erfinder: **Walter, Karl-Heinz, Herzog-Heinrich-Strasse 13,
D-8018 Grafing (DE)**

Vorrichtung zur Darstellung eines Bildes vor einem optisch kontrastierenden Hintergrund

Die Erfindung betrifft eine Vorrichtung gemäß dem Oberbegriff des Anspruchs 1. Ein solches Display ist aus »Elektronik« 6 (1977) 55 bekannt, wo allgemein das Prinzip eines »fluoreszenzaktivierten Displays (FLAD)« dargestellt wird.

Bisher hatte man ein FLAD stets mit einer sogenannten Drehzelle (DE-AS 21 58 563) als Lichtventil verwendet. Ein derartiges Flüssigkristalldisplay liefert bekanntlich bei geringen Verlustleistungen und niedrigen Schaltspannungen einen hohen Darstellungskontrast. Nachteilig ist allerdings, daß eine Drehzelle relativ langsam schaltet, einen nur begrenzten Betrachtungswinkelbereich hat, nicht ohne weiteres Kontrastabstufungen zuläßt und überdies mit einer reinen Wechselspannung angesteuert werden sollte, eine Forderung, die gerade bei den zunehmend in den Vordergrund tretenden Multiplexbetrieb nur schwer zu erfüllen ist. Hinzu kommt, daß die Herstellung einer Drehzelle nach wie vor eine besondere Sorgfalt erfordert und daher der Übergang zur Serienfertigung häufig noch nicht gelungen ist. Diese noch nicht recht befriedigende Situation wird sich — so die in der zitierten Literaturstelle ausgesprochene Erwartung — erst dann wesentlich verbessern, wenn die Drehzelle durch ein Flüssigkristalldisplay mit Farbstoffzusatz und »Phase-change«-Effekt oder durch ein elektrochromes Display ersetzt wird.

Aufgabe der vorliegenden Erfindung ist es, ein FLAD der eingangs genannten Art so auszubilden, daß es praktisch verlustfrei arbeitet, ohne sonderlich hohe Spannungen geschaltet werden kann und zudem auch aus schrägen Richtungen abgelesen werden kann, über einen leicht steuerbaren Bildkontrast verfügt und auch einen Betrieb mit Gleichspannungskomponenten verträgt. Diese Aufgabe wird erfindungsgemäß durch die im Anspruch 1 gekennzeichnete Vorrichtung gelöst.

Der von Franz und Keldysch als Tunneleffekt gedeutete und nach den beiden Wissenschaftlern benannte Feldeffekt besteht darin, daß in Isolatoren oder Halbleitern unter dem Einfluß hoher E-Felder die untere Bandkante des Absorptionsbandes nach längeren Wellenlängen hin verschoben wird (Z. Naturforsch. 13a (1958) 484). Der (lineare und quadratische) Stark-Effekt zeigt sich in einer Erhöhung und Verschiebung des Absorptionsmaximums (US-PS 33 17 266). Beide Phänomene werden in der Monographie von I. F. Chang »Electrochromic and Electrochemichromic Materials and Phenomena« IBM Research, R C 5663 v. 26. 9. 75, insb. Abschnitte III.C und III.D im einzelnen beschrieben.

Da beim Franz-Keldysch-Effekt wie auch beim Stark-Effekt die bisher beobachteten Frequenzverschiebungen vergleichsweise gering sind, werden nur Fluoreszenzstoffe verwendet, die schmalbandig emittieren. Dabei ließe sich der Kontrast noch dadurch erhöhen, daß man das Emissionsband durch zusätzliche Maßnahmen wie Ausfilterungen weiter einengt. Im Normalfall wird das Absorptionsband im ausgeschalteten Zustand das Emissionsband abdecken und im eingeschalteten Zustand, also unter Einfluß eines hinreichend großen E-Feldes, das Fluoreszenzlicht freigeben. Es ist aber auch denkbar und in vielen Fällen, wie statistische Betrachtungen zeigen, vom Leistungsverbrauch her gesehen sogar günstiger, einen Aus-Zustand zu wählen, bei dem das Emissionsband außerhalb des Absorptionsbandes der Anzeigeelemente liegt und im Ein-Zustand vom Absorptionsband überdeckt wird. In diesem Fall wären bei der hier vorgeschlagenen Vorrichtung jeweils gerade diejenigen Anzeigeelemente einzuschalten, die nicht zum Bild, sondern zum Bildhintergrund gehören.

Weiter vorteilhafte Ausgestaltungen und Weiterbildungen der Erfindung sind Gegenstand zusätzlicher Ansprüche.

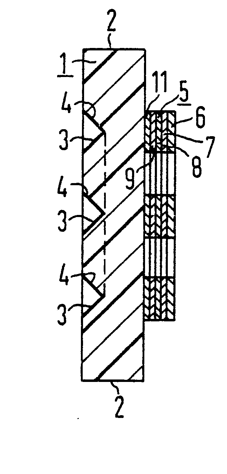

Die Erfindung soll nun anhand eines bevorzugten Ausführungsbeispiels in Verbindung mit der beigefügten Figur näher erläutert werden.

Die Figur zeigt in einem schematisch gehaltenen Seitenschnitt eine Darstellungsvorrichtung, deren Display eine einstellige Ziffernanzeige ist. Die Anzeigevorrichtung enthält eine Fluoreszenzplatte 1, deren Seitenflächen eine Reflexionsschicht 2 tragen und auf deren Rückseite in Form einer »8« Kerben 3 eingebracht sind. Diese Kerben sind im vorliegenden Fall noch zusätzlich jeweils mit einer Spiegelschicht (»dielektrischer Spiegel« 4) versehen. In Blickrichtung vor den Kerben sind jeweils Anzeigeelemente 5 auf die Vorderseite der Platte gesetzt. Jedes Anzeigeelement besteht im einzelnen aus einem Diffusor 6, einer vorderen elektrisch leitenden Schicht (Vorderelektrode 7), einer elektrochromen Schicht 8, einer hinteren elektrisch leitenden Schicht (Rückelektrode 9) und einer der Fluoreszenzplatte anliegenden Abdeckschicht 11. Die Schichten 11 und 6 könnten auch entfallen.

Die fluoreszierenden Partikel sind so gewählt, daß sie ein schmalbandiges Emissionsspektrum von einigen 10 nm haben. Beispiele derartiger Fluoreszenzstoffe — gelöst in einer Flüssigkeit — sind in der DE-OS 27 42 899 genannt. Um das Fluoreszenzband noch weiter einzuengen, sind die dielektrischen Spiegel 4 so ausgelegt, daß sie von der Fluoreszenzstrahlung nur etwa einen 10 nm breiten Frequenzausschnitt nach vorn reflektieren und die übrigen Frequenzen passieren lassen. Die elektrochrome Schicht 8 besteht aus einem Material, das einen ausgeprägten Franz-Keldysch-Effekt zeigt, und hat ein Absorptionsband, dessen verschiebbare Kante etwa an der oberen Grenzfrequenz des von den Lichtaustrittsfenstern ausgekoppelten Lichts liegt. Bei diesen Bandpositionen leuchtet jedes Anzeigeelement im Ruhezustand in einem bestimmten Farbton. Legt man eine elektrische Spannung an das Anzeigeelement, so bewegt sich die Absorptionskante der elektrochromen Schicht in das Durchlaßband der dielektrischen Spiegel hinein, bis es bei einem hinreichend starken E-Feld das gesamte Licht der Lichtaustrittsfenster sperrt. In diesem Zustand erscheint das Anzeigeelement dunkel. Entsprechend dem hellen Aus-Zustand und dem dunklen Ein-Zustand ist die Anzeigevorrichtung »komplementär« bzw. »invers« zu adressieren.

Da sich nur vor den Lichtaustrittsfenstern kleinflächige Anzeigeelemente befinden, kann Umgebungslicht auch von vorn in die Fluoreszenzplatte eintreten; dadurch nimmt der Helligkeitsverstärkungsfaktor der Platte einen sehr hohen Wert an. Auch der Raumwinkelbereich, aus dem die dargestellte Information noch erkannt werden kann, ist sehr hoch, weil die einzelnen Lichtventile flach sind.

**Patentansprüche**

1. Vorrichtung zur Darstellung eines Bildes vor einem optisch kontrastierenden Hintergrund, enthaltend einen Fluoreszenzkörper (1), der aus einem Material mit einem Brechungsindex größer 1 besteht, mit Lichtaustrittsfenstern (3) versehen ist und in dem in einem ersten Frequenzbereich (Emissionsband) fluoreszierende Partikel gelöst sind, sowie ein vor dem Fluoreszenzkörper befindlichen elektrochromes Display mit einer Anzahl von elektrisch schaltbaren Anzeigeelementen (5), die jeweils vor einem der Lichtaustrittsfenster angeordnet sind und in einem zweiten Frequenzbereich (Absorptionsband) sperren, wobei zur Bilddarstellung die Absorptionsbänder einzelner Anzeigeelemente durch Erzeugung eines elektrischen Feldes geändert werden, dadurch gekennzeichnet, daß das Display ein Festkörper-Display ist und auf der Basis des Franz-Keldysch-Effektes oder des Stark-Effektes arbeitet.

2. Vorrichtung nach Anspruch 1, dadurch gekennzeichnet, daß die Absorptionsbänder der ausgeschalteten Anzeigeelemente (5) das Emissionsband der fluoreszierenden Partikel im wesentlichen einschließen und die Absorptionsbänder der eingeschalteten Anzeigeelemente (5) im wesentlichen außerhalb des Emissionsbandes der fluoreszierenden Partikel liegen und daß zur Bilddarstellung die jeweils zum Bild gehörenden Anzeigeelemente (5) eingeschaltet werden.

3. Vorrichtung nach Anspruch 1, dadurch gekennzeichnet, daß die Absorptionsbänder der ausgeschalteten Anzeigeelemente (5) im wesentlichen außerhalb des Emissionsbandes der fluoreszierenden Partikel liegen und die Absorptionsbänder der eingeschalteten Anzeigeelemente (5) das Emissionsband der fluoreszierenden Partikel im wesentlichen einschließen und daß zur Bilddarstellung die jeweils zum Bildhintergrund gehörenden Anzeigeelemente (5) eingeschaltet werden.

4. Vorrichtung nach einem der Ansprüche 1 bis 3, dadurch gekennzeichnet, daß das Display aus einem Diffusor (6), einer Vorderelektrode (7), einer elektrochromen Schicht (8), einer Rückelektrode (9) und ggf. einer Abschlußschicht (11) besteht.

5. Vorrichtung nach einem der Ansprüche 1 bis 4, dadurch gekennzeichnet, daß das Display aus Anzeigeelementen (5) besteht, die lediglich die Lichtaustrittsfenster (3) des Fluoreszenzkörpers (1) bedecken.

6. Vorrichtung nach einem der Ansprüche 1 bis 5, dadurch gekennzeichnet, daß der Fluoreszenzkörper (1) ein plattenförmiger Körper ist, auf dessen Rückseiten Kerben (3) angebracht sind, die mit dielektrischen Spiegeln (4) versehen sind, die von der Fluoreszenzstrahlung nur einen etwa 10 nm breiten Frequenzausschnitt in Richtung der Anzeigeelemente (5) reflektieren und Strahlung anderer Frequenzen passieren lassen.

**Claims**

1. Apparatus for representing an image in front of an optically-contrasting background, including a fluorescence body (1) which is made of a material having a refractive index greater than 1, which body is provided with light emergence windows (3) and in which fluorescent particles are dissolved which fluoresce in a first frequency range (emission band), and an electrochromic display positioned in front of the fluorescence body and having a plurality of electrically-switchable display elements (5), each of which is arranged in front of a respective one of the light emergence windows, and which cut-off in a second frequency range (absorption band), wherein, in order to represent the image, the absorption bands of individual display elements are altered by the production of an electric field, characterised in that the display is a solid-body display, the operation of which is based on the Franz-Keldysch effect or the Stark effect.

2. Apparatus as claimed in Claim 1, characterised in that the absorption bands of the switched-off display elements (5) essentially include the emission band of the fluorescent particles and the absorption bands of the switched-on display elements (5) essentially lie outside the emission band of the fluorescent particles, and that for image representation, those display elements (5) which are assigned to the image are switched-on.

3. Apparatus as claimed in Claim 1, characterised in that the absorption bands of the switched-off display elements (5) essentially lie outside the emission band of the fluorescent particles and the absorption bands of the switched-on display elements (5) essentially include the emission band of the fluorescent particles, and that for image representation, those display elements (5) which are assigned to the image background are switched-on.

4. Apparatus als claimed in one of Claims 1 to 3, characterised in that the display consists of a diffuser (6), a front electrode (7), an electrochromic layer (8), a rear electrode (9) and, if required, a terminal layer (11).

5. Apparatus as claimed in one of Claims 1 to 4, characterised in that the display consists of display elements (5) which only cover the light emergence windows (3) of the fluorescence body (1).

6. Apparatus as claimed in one of Claims 1 to 5, characterised in that the fluorescence body (1) is a plate-shaped body in the rear face of which there are arranged grooves (3) which are provided with dielectric mirrors (4) which reflect only an approximately 10 nm wide frequency sector of the fluorescence radiation, in the direction of the display elements (5), and allow radiation of other frequencies to pass.

**Revendications**

1. Dispositif pour représenter une image devant un fond donnant un contraste optique, du type comportant un corps fluorescent (1) constitué par un matériau ayant un indice de réfraction supérieur à 1, pourvu de fenêtres de sortie (3) de la lumière et dans lequel, dans une première gamme de fréquences (bandes d'émission) des particules fluorescentes sont dissoutes, ainsi qu'un moyen d'affichage électrochrome se situant devant le corps fluorescent et pourvu d'un nombre d'éléments d'affichage (5) susceptibles d'être commandés par voie électrique et disposés chacun devant l'une des fenêtres de sortie de la lumière et bloquant dans une seconde gamme de fréquences (bandes d'absorption), les bandes d'absorption des différents éléments d'affichage étant, pour la représentation d'une image, modifiés par la production d'un champ électrique, caractérisé par le fait que le dispositif d'affichage est un dispositif d'affichage à corps solide et opère sur la base de l'effet Franz-Keldysch ou de l'effet Stark.

2. Dispositif selon la revendication 1, caractérisé par le fait que les bandes d'absorption des éléments d'affichage (5) mis hors circuit comprennent essentiellement la bande d'émission des particules fluorescentes, alors que les bandes d'absorption des éléments d'affichage (5) mis hors circuit se situent essentiellement à l'intérieur de la bands d'émission des particules fluorescentes, et que pour la représentation des images, les éléments d'affichage qui appartiennent à l'image sont mis en circuit.

3. Dispositif selon la revendication 1, caractérisé par le fait que les bandes d'absorption des éléments d'affichage (5) qui sont mis hors circuit se situent essentiellement à l'extérieur de la bande d'émission des particules fluorescentes et les bandes d'absorption des éléments d'affichage (5) mis hors circuit comprennent essentiellement la bande d'émission des particules fluorescentes, et que la représentation de l'image les éléments d'affichage (5) qui appartiennent au fond de l'image sont mis en circuit.

4. Dispositif selon une des revendications 1 à 3, caractérisé par le fait que le moyen d'affichage est constitué par un diffuseur (6), par une électrode antérieure (7), par une couche électrochrome (8), par une électrode postérieure (8) et éventuellement par une couche de fermeture (11).

5. Dispositif selon l'une des revendications 1 à 4, caractérisé par le fait que le moyen d'affichage est constitué par des éléments d'affichage (5) qui recouvrent uniquement les fenêtres de sortie (3) de la lumière du corps fluorescent (1).

6. Dispositif selon l'une des revendications 1 à 5, caractérisé par le fait que le corps fluorescent (1) est un corps en forme de plaque, dans la face postérieure duquel sont ménagées des encoches (3) pourvues de miroirs diélectriques (4) qui ne réfléchissent, du rayonnement fluorescent, qu'une largeur de bande de fréquences de 10 nm environ en direction des éléments d'affichage (5) et laissent passer le rayonnement d'autres fréquences.